**Europäisches Patentamt**

**European Patent Office**

**Office européen des brevets**

(11) Veröffentlichungsnummer: **0 037 435**

**A1**

# (12) EUROPÄISCHE PATENTANMELDUNG

(21) Anmeldenummer: **80107691.0**

(22) Anmeldetag: **06.12.80**

(51) Int. Cl.³: **F 16 B 12/00**
**H 04 R 1/02**

(30) Priorität: **05.04.80 DE 3013413**

(43) Veröffentlichungstag der Anmeldung:
**14.10.81 Patentblatt 81/41**

(84) Benannte Vertragsstaaten:
**AT CH FR GB LI NL**

(71) Anmelder: **Braun Aktiengesellschaft**
**Rüsselsheimer Strasse 22**
**D-6000 Frankfurt/Main(DE)**

(72) Erfinder: **Kadner, Waldemar**
**Wiesenweg 35**
**D-6056 Heusenstamm(DE)**

(72) Erfinder: **Oppermann, Günter**
**Kirchbornstrasse 37**
**D-6057 Dietzenbach(DE)**

(72) Erfinder: **Poock, Uwe**
**Frankfurter Strasse 55**
**D-6233 Kelkheim(DE)**

(74) Vertreter: **Einsele, Rolf**
**Braun Aktiengesellschaft Postfach 1120 Am**
**Schanzenfeld**
**D-6242 Kronberg Taunus(DE)**

(54) Verbindungselement.

(57) Für die einfache Herstellung von Lautsprecherboxen wird ein Verbindungselement vorgeschlagen, mit dem die einzelnen Wände dieser Boxen untereinander verbunden werden können. Dieses Verbindungselement weist zwei aufeinander senkrecht stehende Schenkel (4,5) auf, an welche die Stirnseiten der Boxenwände anstoßen. Auf der in das Boxen-Innere gerichteten Seite des Verbindungselements (4, 5) ist ein Führungselement (6) vorgesehen, während auf der nach außen gerichteten Seite des Verbindungselements eine Halterung vorgesehen ist, an der eine Abdeckleiste befestigt werden kann.

FIG.6

Verbindungselement

Die Erfindung betrifft ein Verbindungselement zum Verbinden zweier aufeinander senkrecht stehender Wände.

Zum Verbinden von Wänden, die senkrecht oder in einem definierten Winkel aufeinanderstehen, sind besondere Verbindungselemente nötig.

Es ist bereits eine Kiste bekannt, die ebene und voneinader getrennte Gehäusewände aufweist, wobei Verbindungsteile vorgesehen sind, mit denen die getrennten Gehäusewände miteinander verbindbar sind (DE-OS 27 22 343). Zur Befestigung der Verbindungsteile mit den Gehäusewänden müssen diese Wände auf ihren Innenseiten mit Nuten versehen werden.

Der Erfindung liegt deshalb die Aufgabe zugrunde, ein Verbindungselement zu schaffen, bei dem keine Einkerbungen benötigt werden.

Diese Aufgabe wird gemäß den Merkmalen des Patentanspruchs 1 gelöst.

Der mit der Erfindung erzielte Vorteil besteht insbesondere darin, daß ein Gehäuse, welches mit dem erfindungsgemäßen Verbindungselement zusammengefügt wird, an den Verbindungskanten keine unschönen Kanten und Ecken aufweist. Außerdem ist ein solches Gehäuse, z. B. ein Lautsprechergehäuse, leicht montierbar.

...

Ein Ausführungsbeispiel der Erfindung ist in der Zeichnung dargestellt und wird im folgenden näher beschrieben.

Es zeigen:

Fig. 1    eine erste Variante eines Verbindungselements;

Fig. 2    eine zweite Variante eines Verbindungselements;

Fig. 3a   ein Verbindungselement, dessen Einzelteile auseinandergenommen sind;

Fig. 3b   das Verbindungselement der Fig.3a, jedoch mit zusammengebauten Einzelteilen;

Fig. 4    eine weitere Variante des Verbindungselements, und zwar
          des mit den Wänden des verbindbaren Teils;

Fig. 5    eine Abdeckleiste für den in der Fig.4 dargestellten Teil;

Fig. 6    einen Zusammenbau der Vorrichtungen der Figuren 4 und 5;

Fig. 7    eine weitere Variante eines Verbindungselements.

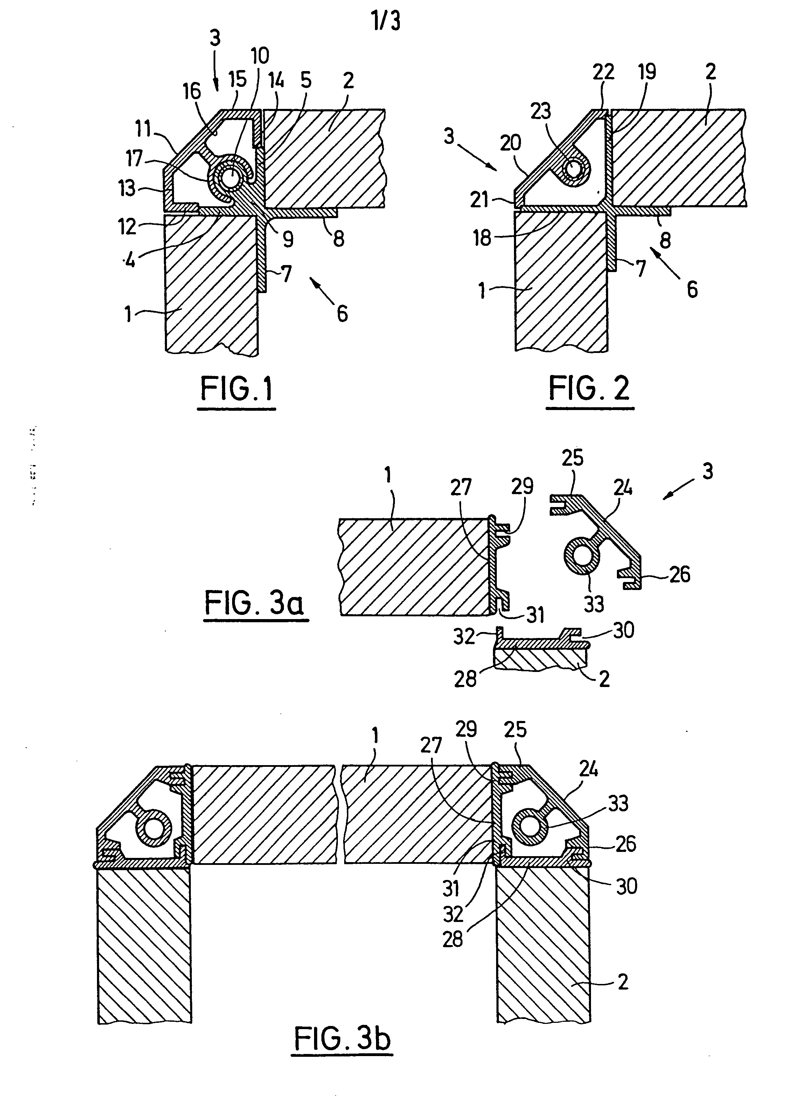

In der Fig.1 sind zwei senkrecht aufeinanderstehende Wände 1, 2 angedeutet, die über ein Verbindungselement 3 miteinander verbunden
sind. Dieses Verbindungselement 3 enthält zwei senkrecht aufeinanderstehende Schenkel 4, 5, die an ihrer Verbindungsstelle ein Führungselement 6 aufweisen, welches aus zwei Schenkeln 7, 8 besteht.
Die Schenkel 5, 8 umschließen zwei Endseiten der Wand 2 wenigstens
teilweise und sind mit diesen verklebt oder auf eine sonstige Weise
verbunden, während die Schenkel 4, 7 die Endseiten der Wand 1 teilweise umschließen und mit diesen verbunden sind. An der Stoßstelle
der beiden Schenkel 4, 5 ist eine Verstärkung 9 vorgesehen, die
einen runden Schraubkanal 10 enthält. Dieser Schraubkanal 10 dient
als Halteelement für eine Abdeckleiste 11, welche zwei jeweils
senkrecht aufeinanderstehende Schenkel 12, 13; 14, 15 sowie einen
im Winkel von 45° angeordneten Verbindungsschenkel 16 aufweist. An
diesem Verbindungsschenkel 16 ist eine im wesentlichen halbkreisförmige Klips-Verbindung 17 befestigt, die über den Schraubkanal 10
geklipst werden kann.

Die Verbindung der beiden Wände 1, 2 miteinander erfolgt zweckmäßigerweise dadurch, daß die Schenkel 4, 5; 7, 8 auf ihren den Wänden
1, 2 zugewandten Seiten mit einem Kleber bestrichen und dann die Wände 1, 2 an die Schenkel 4, 5; 7, 8 angedrückt werden. Sodann wird die Abdeckleiste 11 auf den Schraubkanal 10 aufgeklipst, indem eine Kraft senkrecht auf den Schenkel 16 aufgebracht wird. Der mit den Wänden 1, 2 verklebte Teil des Verbindungselements 3 kann aus Kunststoff bestehen, während die Abdeckleiste etwa aus Aluminium besteht. Es versteht sich jedoch, daß auch beliebige andere Materialien verwendet werden können.

Der Schraubkanal 10 dient z. B. dazu, bei einem Lautsprechergehäuse, dessen vier Seitenwände mit Hilfe des Verbindungselements 3 verbunden wurden, einen Boden und/oder einen Deckel aufzuschrauben, wie es etwa die Fig.1 der Patentanmeldung P 29 22 998 zeigt.

In der Fig.2 ist eine Variante der Erfindung dargestellt, bei der die Schenkel nahezu die ganze Stirnseite der Wände 1, 2 bedecken. Außerdem dienen die Enden der Schenkel 18, 19 als Halteelemente für die Halterung der Abdeckleiste 20, die mit ihren abgewinkelten Schenkeln 21, 22 mit diesen Enden verklebt oder auf sonstige Weise verbunden ist. Der Schraubkanal 23 ist hierbei Bestandteil der Abdeckleiste 20, die auf ihrer Innenseite einen entsprechenden Vorsprung aufweist.

In der Fig.3a ist eine weitere Variante der Erfindung gezeigt, wobei die Einzelteile des Verbindungselements 3 getrennt dargestellt sind. Die Abdeckleiste 24 weist hierbei einen Schraubkanal 33 sowie zwei Schenkel 25, 26 auf, die an ihren Enden gabelförmig gespalten sind. Die mit den Stirnseiten der Wände 1, 2 verbundenen Schenkel 27, 28 besitzen an jeweils einem ihrer Enden ebenfalls eine Gabel 29, 30, die in die Enden 25 beziehungsweise 26 eingreift. Das andere Ende des Schenkels 27 weist eine weitere Gabel 31 auf, in die ein Zapfen 32 des Schenkels 28 eingreift.

In der Fig.3b ist das Verbindungselement 3 der Fig.3a noch einmal im zusammengebauten Zustand dargestellt. Man erkennt hierbei, daß zuerst der Schenkel 28 mit dem Schenkel 27 verbunden wird, indem der Zapfen 32 in die Gabel 31 eingreift. Sodann wird die Abdeck-

...

leiste 24 von oben nach unten oder von unten nach oben mit ihren Gabeln 25, 26 in die Gabeln 29, 30 eingeschoben. Da dieser Vorgang auch umgekehrt vollzogen werden kann, handelt es sich bei der Vorrichtung der Fig.3b um ein lösbares Verbindungselement.

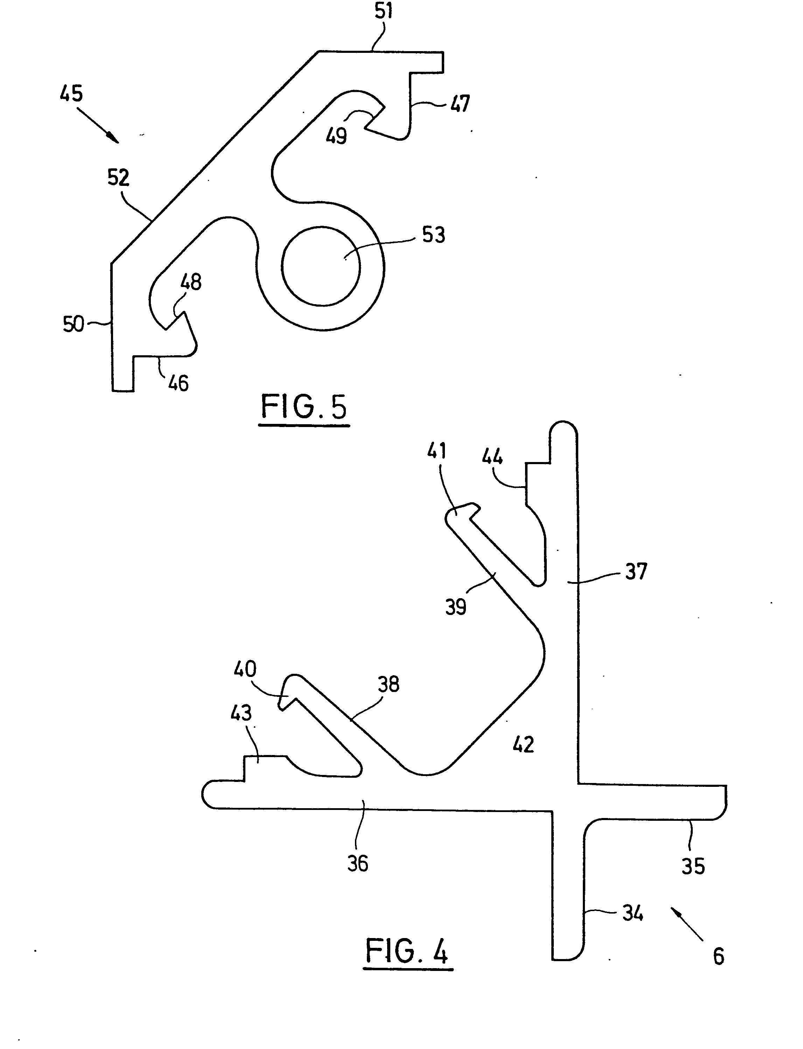

Die Fig.4 zeigt eine weitere Variante der Erfindung, und zwar denjenigen Teil des Verbindungselements, der mit den Wänden verbunden wird. Dieser Teil weist ein Führungselement 6 mit zwei senkrecht aufeinanderstehenden Seitenteilen 34, 35 auf, die mit den Schenkeln 36, 37 verbunden sind. An diesen Schenkeln 36, 37 sind Halteelemente 38, 39 in einem Winkel von $45^{\circ}$ angeordnet, die an ihren Enden Einrasthaken 40, 41 aufweisen. An den Verbindungsstellen der Schenkel 36, 37 ist eine Verstärkung 42 vorgesehen, die ein leichtes Verbiegen oder Abknicken der Schenkel 36, 37 verhindert. An ihren Enden sind die Schenkel 36, 37 mit jeweils einem Vorsprung 43, 44 versehen, der für den Eingriff der Abdeckleiste 45 dient.

Eine solche Abdeckleiste 45 ist in der Fig.5 dargestellt, wobei diese Abdeckleiste 45 zwei Halteelemente 46, 47 mit Einrasthaken 48, 49 aufweist. Außerdem besitzt diese Abdeckleiste 45 zwei rechtwinklig zueinander angeordnete Schenkel 50, 51 sowie einen $45^{\circ}$ zu diesen Schenkeln 50, 51 angeordneten Verbindungsschenkel 52. Ferner ist die Abdeckleiste 45 mit einem Schraubkanal 53 versehen, der zur Aufnahme einer Verbindungsschraube dient.

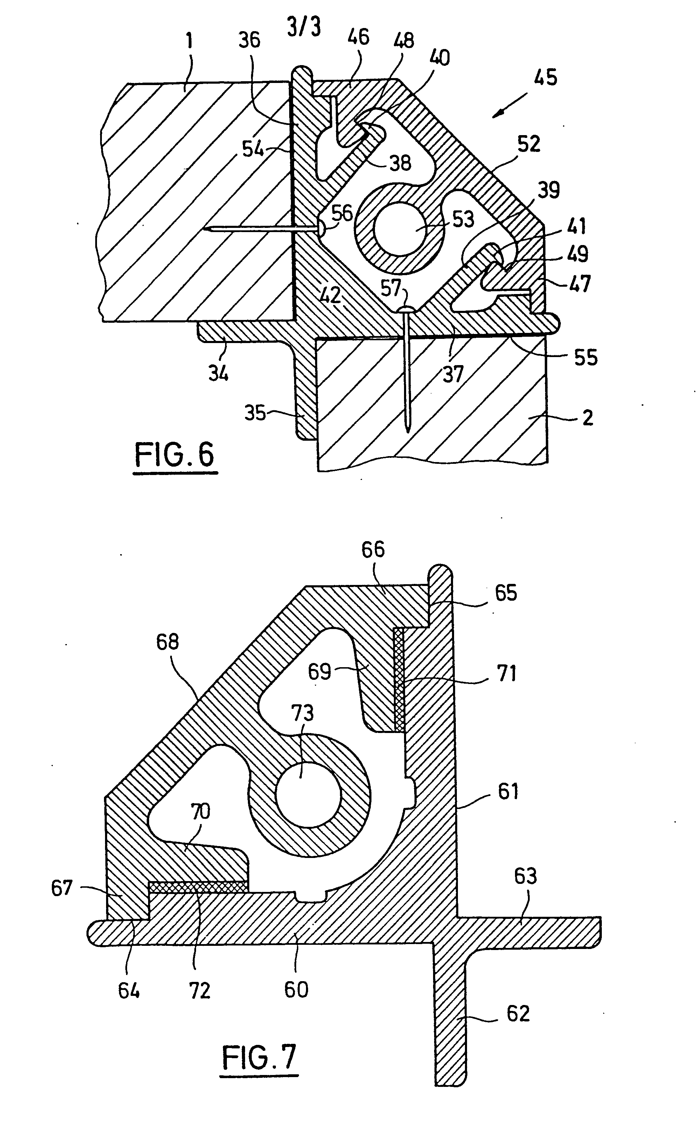

In der Fig.6 sind beide Teile des in den Figuren 4 und 5 gezeigte Verbindungselement 3 gemeinsam dargestellt, wobei die Abdeckleiste 45 mit ihren Einrasthaken 48, 49 in die Einrasthaken 40, 41 der Schenkel 37, 38 eingerastet ist. Zwischen den Schenkeln 36, 37 und den Stirnseiten der Wände 1, 2 ist jeweils ein doppelseitiges Klebeband 54, 55 vorgesehen, dessen Verbindungswirkung noch durch Nägel 56, 57 verstärkt werden kann.

...

0037435

Die in der Fig.7 gezeigte Variante enthält zwei Schenkel 60, 61, die mit einem Führungselement versehen sind, welches aus zwei Teilen 62, 63 besteht. Dieses Führungselement könnte auch massiv und rechteckig sein. An ihrem oberen Ende weisen die Schenkel 60, 61 Aussparungen 64, 65 auf, in welche Nasen 66, 67 einer Abdeckleiste 68 eingreifen. Senkrecht zu diesen Nasen 66, 67 verlaufen Flansche 69, 70, die über jeweils einen Klebestreifen 71, 72 mit den Schenkeln 60, 61 verbunden sind. Der Schraubkanal 73 ist mit der Abdeckleiste 68 verbunden.

Patentansprüche

1. Verbindungselement zum Verbinden zweier aufeinander senkrecht stehender Wände, dadurch gekennzeichnet, daß zwei aufeinander senkrecht stehende Schenkel (4,5; 18,19; 27,28; 36,37; 60,61) vorgesehen sind, die an ihrer Verbindungsstelle ein Führungselement (6, 31, 32) aufweisen und Halteelemente (10, 18, 19, 29, 30, 38, 39, 71, 72) für die Halterung einer Abdeckleiste (11, 20, 24, 45, 68) besitzen.

2. Verbindungselement nach Anspruch 1, dadurch gekennzeichnet, daß das Führungselement (6) mindestens zwei rechtwinklig aufeinanderstehende Seitenteile (7, 8; 34, 35) hat.

3. Verbindungselement nach Anspruch 1, dadurch gekennzeichnet, daß die Halteelemente (38, 39) in einem Winkel von ca. 45° zu den Schenkeln (36, 37) angeordnet sind und Einrasthaken (40, 41) aufweisen.

4. Verbindungselement nach Anspruch 1, dadurch gekennzeichnet, daß die Schenkel (36, 37) an ihrer Verbindungsstelle eine Verstärkung (42) aufweisen.

5. Verbindungselement nach Anspruch 1, dadurch gekennzeichnet, daß die Schenkel (36, 37) an ihren Enden einen Vorsprung (43, 44) aufweisen.

6. Verbindungselement nach Anspruch 1, dadurch gekennzeichnet, daß die Abdeckleiste (45) Halteelemente (46, 47) mit Einrasthaken (48, 49) aufweist.

7. Verbindungselement nach den Ansprüchen 1 und 6, dadurch gekennzeichnet, daß die Abdeckleiste (45) zwei rechtwinklig zueinander angeordnete Schenkel (50, 51) und einen 45° zu diesen Schenkeln (50, 51) angeordneten Verbindungsschenkel (52) aufweist.

...

8. Verbindungselement nach den Ansprüchen 1 und 6, dadurch gekennzeichnet, daß die Abdeckleiste mit einem Schraubkanal (23, 33, 53, 73) versehen ist.

9. Verbindungselement nach den Ansprüchen 1 und 2, dadurch gekennzeichnet, daß das Führungselement (6) eine rechteckige Grundfläche hat und massiv ist.

10. Verbindungselement nach Anspruch 1, dadurch gekennzeichnet, daß als Halteelement ein Schraubkanal (10) vorgesehen ist, der von einer im wesentlichen halbkreisförmigen Schelle (17) der Abdeckleiste (11) umfaßt wird.

11. Verbindungselement nach Anspruch 1, dadurch gekennzeichnet, daß die Schenkel (27, 28) und die Abdeckleiste (24) gabelförmige Enden (25, 26, 29, 31, 30) beziehungsweise Zapfen (32) aufweisen, die ineinandergreifen.

12. Verbindungselement nach Anspruch 1, dadurch gekennzeichnet, daß die Schenkel (60, 61) Aussparungen (64, 65) aufweisen, in welche Vorsprünge (66, 67) der Abdeckleiste (68) eingreifen.

13. Verbindungselement nach Anspruch 12, dadurch gekennzeichnet, daß die Abdeckleiste Schenkel (69, 70) aufweist, die parallel zu den Schenkeln (60, 61) verlaufen und mit diesen über Klebestreifen (71, 72) verklebt sind.

FIG.1

FIG. 2

FIG. 3a

FIG. 3b

0037435

FIG. 5

FIG. 4

FIG.6

FIG.7

**Europäisches Patentamt**

# EUROPÄISCHER RECHERCHENBERICHT

| | EINSCHLÄGIGE DOKUMENTE | | | KLASSIFIKATION DER ANMELDUNG (Int. Cl ¹) |
|---|---|---|---|---|
| Kategorie | Kennzeichnung des Dokuments mit Angabe, soweit erforderlich, der maßgeblichen Teile | betrifft Anspruch | | |
| X | DE - A - 2 803 056 (SYSTEMKONSTRUKTION PRODUKT-ENTWICKLUNGSGESELLSCHAFT MBH)<br><br> + Fig. 1 +<br><br>-- | 1-12 | | F 16 B 12/00<br><br>H 04 R 1/02 |
| | DE - B - 2 426 659 (TONMÖBELWERK METZ INH. PAUL METZ)<br><br> + Gesamt +<br><br>-- | 13 | | |
| | DE - A - 2 519 607 (SYCO PRODUKT-ENTWICKLUNGSGESELLSCHAFT MBH)<br><br> + Fig. 4 +<br><br>-- | 1-12 | | **RECHERCHIERTE SACHGEBIETE (Int. Cl.³)** |
| | US - A - 2 969 268 (MASON)<br><br> + Spalte 3, Zeilen 61-73; Fig. 4 +<br><br>-- | 1 | | H 04 B 1/00<br>H 04 R 1/00<br>H 04 N 5/00<br>F 16 B 12/00 |
| | DE - A - 2 052 111 (LICENTIA PATENT-VERWALTUNGS GMBH)<br><br> + Fig. 6,9 +<br><br>-- | 1 | | B 65 D 5/00<br>B 65 D 6/00<br>H 05 K 5/00 |
| | DE - A - 2 900 348 (LEONARD, LIONEL, BICKER)<br><br> + Fig. 3-15, 37-40 +<br><br>---- | 1 | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 09-06-1981 | HÜTTNER |

EPA form 1503.1   06.78